# EUROPEAN PATENT APPLICATION

(11) **EP 4 643 809 A1**
(43) Date of publication of application: **05.11.2025**
(21) Application number: 23910076.1
(22) Date of filing: 11.12.2023
(51) Int. Cl.: A61C 7/08, A61C 7/00

(54) **ORTHODONTIC SYSTEM FOR TREATING ORAL CAVITY AND GENERATION METHOD THEREFOR, ELECTRONIC DEVICE, AND STORAGE MEDIUM**

(30) Priority: 28.12.2022 CN 202211692734; 28.12.2022 CN 202223509631 U
(71) Applicant: Shanghai Smartee Denti-Technology Co., Ltd., Shanghai 201210 (CN); Zhejiang Yinchili Medical Technology Co., Ltd., Jiaxing, Zhejiang 314006 (CN); Shi, Zhen, Shanghai 201210 (CN)
(72) Inventor: SHU, Lei, Shanghai 201210 (CN); ZHUANG, Huimin, Shanghai 201210 (CN); ZHANG, Chaoqun, Shanghai 201210 (CN); WANG, Xingxing, Shanghai 201210 (CN); YAO, Junfeng, Shanghai 201210 (CN); SHI, Zhen, Shanghai 201210 (CN)
(74) Representative: Balder IP Law, S.L.
(86) International application number: PCT/CN2023/137949
(87) International publication number: WO 2024/140146

(57) **Abstract**

An orthodontic treatment system, including a series of appliances designed to progressively implement a treatment plan. The series of appliances include at least a first appliance (1) and a second appliance (2) having substantially similar shapes. The first appliance (1) includes a first support portion (11) that is in contact with at least some of teeth. A lingual side edge of the first support portion (11) extends toward gums to form a first inner wall (12) to be arranged on a lingual side of a dental arch, and a buccal side edge of the first support portion (11) extends toward gums to form a first outer wall (13). The first outer wall (13), the first support portion (11), and the first inner wall (12) together define a first upper groove (14) configured to limit the upper dental arch and a first lower groove (15) configured to limit the lower dental arch. In a sagittal direction, an anterior region of the first upper groove (14) spaces apart from an anterior region of the first lower groove (15) by a first distance (L1) configured for a first stage of the treatment plan. In the sagittal direction, an anterior region of a second upper groove (24) of the second appliance (2) spaces apart from an anterior region of a second lower groove (25) of the second appliance (2) by a second distance (L2) configured for a second stage of the treatment plan. The first distance (L1) is different from the second distance (L2).

## Description

### CROSS REFERENCE TO RELATED APPLICATIONS

The present application claims the benefit of priority to Chinese Patent Application No. 202211692734.1, entitled "ORTHODONTIC TREATMENT SYSTEM AND METHOD FOR MANUFACTURING THE SAME, ELECTRONIC DEVICE, AND STORAGE MEDIUM" filed on December 28, 2022, which is incorporated herein by reference in its entirety.

The present application further claims the benefit of priority to Chinese Patent Application No. 202223509631.5, entitled "ORTHODONTIC TREATMENT SYSTEM" filed on December 28, 2022, which is incorporated by reference herein in its entirety.

### TECHNICAL FIELD

Embodiments of the present disclosure relate to the field of orthodontic technologies, and in particular to an orthodontic treatment system, a method for manufacturing the orthodontic treatment system, an electronic device, and a storage medium.

### BACKGROUND

Currently, silicone appliances made of medical-grade silicone materials are primarily used for the treatment of early malocclusion deformity. These appliances function as early-stage orthodontic appliances for malocclusion deformity utilizing natural growth and development. They are characterized by an aesthetically pleasing appearance and a comfortable wearing experience, which helps to prevent problems due to discomfort, such as refusing to wear the appliance by children, adverse effects on physical and psychological development, and the like. As a result, an increasing number of people are choosing silicone appliances as treatment tools for early malocclusion deformity.

In current pediatric oral treatment, physicians typically select a silicone appliance fitting with current dental arch dimensions of a patient. Existing products generally offer only a limited number of predefined dimensions, and thus the dimensions of silicone appliances are relatively fixed and cannot be precisely customized according to the patient's oral or dentition conditions. As a result, it is difficult to achieve individualized treatment. Consequently, when treating malocclusion deformities such as deep overbite or anterior crossbite, a silicone appliance often applies excessive orthodontic force to the teeth, leading to undesired labiolingual tipping of the anterior teeth or rotational displacement of the mandible, either clockwise or counterclockwise, which may ultimately result in treatment failure.

Therefore, there is a need to provide a treatment device that can more precisely control sagittal movement of the teeth and the jaw.

### SUMMARY

To this end, embodiments of the present disclosure provide an orthodontic treatment system including a series of appliances designed to progressively implement a treatment plan. The series of appliances includes at least a first appliance and a second appliance. The first appliance includes a first support portion configured to contact at least some of teeth. The first support portion has a lingual side edge extending toward gums to form a first inner wall to be arranged on a lingual side of a dental arch. The first support portion has a buccal side edge extending toward the gums to form a first outer wall configured to be in contact with labial and buccal muscles. The first outer wall, the first support portion, and the first inner wall together define a first upper groove configured to limit an upper dental arch and a first lower groove configured to limit a lower dental arch. In a sagittal direction, an anterior region of the first upper groove spaces apart from an anterior region of the first lower groove by a first distance configured for a first stage of the treatment plan. The second appliance includes a second support portion configured to be in contact with at least some of the teeth. The second support portion has a lingual side edge extending toward gums to form a second inner wall to be arranged on a lingual side of a dental arch. The second support portion has a buccal side edge extending toward the gums to form a second outer wall configured to be in contact with the labial and buccal muscles. The second outer wall, the second support portion, and the second inner wall together define a second upper groove configured to limit the upper dental arch and a second lower groove configured to limit the lower dental arch. In the sagittal direction, an anterior region of the second upper groove spaces apart from an anterior region of the second lower groove by a second distance configured for the second stage of the treatment plan. The first distance is different from the second distance.

In some embodiments, the second distance is smaller than the first distance.

In some embodiments, a torque ridge configured to prevent labiolingual tipping of one or more teeth in an anterior region is provided on an inner surface of at least one of the first inner wall or the first outer wall.

In some embodiments, a torque ridge configured to prevent labiolingual tipping of one or more teeth in an anterior region is provided on an inner surface of at least one of the second inner wall or the second outer wall.

In some embodiments, a vertical height of an anterior region of the first support portion is equal to a vertical height of an anterior region of the second support portion.

In some embodiments, in the first stage of the treatment plan, a posterior region of the first support portion has a vertical height configured to compensate for a gap between a surface of the posterior region of the first support portion and teeth located at positions corresponding to the posterior region of the first support portion.

In some embodiments, in the second stage of the treatment plan, a posterior region of the second support portion has a vertical height configured to compensate for a gap between a surface of the posterior region of the second support portion and teeth located at positions corresponding to the posterior region of the second support portion.

In some embodiments, a height of the posterior region of the first support portion is different from a height of the posterior region of the second support portion.

In some embodiments, in response to the orthodontic treatment system including at least three appliances, vertical heights of posterior regions of support portions of the appliances progressively decrease as treatment progresses.

In some embodiments, a first occlusal pad configured to adjust a vertical occlusal relationship between upper and lower jaws is provided on a surface of the first support portion facing to occlusal surfaces of the teeth, and a second occlusal pad configured to adjust the vertical occlusal relationship between the upper and lower jaws is provided on a surface of the second support portion facing to the occlusal surfaces of the teeth.

According to some embodiments of the present disclosure, another aspect of the present disclosure provides a method for manufacturing an orthodontic treatment system, where the orthodontic treatment system includes a series of appliances designed to progressively implement a treatment plan. The series of appliances at least includes a first appliance and a second appliance. The method includes: acquiring, according to the treatment plan, an occlusal relationship between upper and lower jaws in a first stage of the treatment plan and an occlusal relationship between the upper and lower jaws in a second stage of the treatment plan; determining a digital geometry of the first appliance and a digital geometry of the second appliance; and manufacturing the orthodontic treatment system, including manufacturing the first appliance according to the digital geometry of the first appliance and manufacturing the second appliance according to the digital geometry of the second appliance. The occlusal relationship in the first stage refers to a first distance between anterior teeth at the upper jaw and anterior teeth at the lower jaw in a sagittal direction, and the occlusal relationship in the second stage refers to a second distance between the anterior teeth at the upper jaw and the anterior teeth at the lower jaw in the sagittal direction. The digital geometry of the first appliance includes at least a first upper groove configured to accommodate an upper dental arch and a first lower groove configured to accommodate a lower dental arch, and a distance between the first upper groove and the first lower groove in the sagittal direction is equal to the first distance. The digital geometry of the second appliance includes at least a second upper groove configured to accommodate the upper dental arch and a second lower groove configured to accommodate the lower dental arch, a distance between the second upper groove and the second lower groove in the sagittal direction is equal to the second distance, and the first distance is different from the second distance.

According to some embodiments of the present disclosure, still another aspect of the present disclosure provides an electronic device, including: at least one processor; and a memory communicatively connected to the at least one processor. The memory stores instructions executable by the at least one processor, and the instructions, when executed by the at least one processor, enable the at least one processor to perform operations of the method for manufacturing an orthodontic treatment system as described above.

According to some embodiments of the present disclosure, yet another aspect of the present disclosure provides a computer-readable storage medium, configured to store a computer program which, when executed by a processor, causes the processor to perform operations of the method for manufacturing an orthodontic treatment system as described above.

The orthodontic treatment system in the present disclosure gradually changes the sagittal distance between the upper and lower jaws using different silicone appliances. This staged treatment allows for better matching of widths of the upper and lower dental arches and occlusal planes after treatment, and gradually changing the sagittal distance between the upper and lower jaws can reduce the lingual tipping or labial tipping of anterior teeth at the upper and lower jaws and the clockwise or counterclockwise rotational displacement of the lower jaw. Furthermore, the orthodontic treatment system in the present disclosure is appliable to various types of malocclusion deformities, making it suitable for a wide range of cases.

Furthermore, the inner and outer walls of the appliances of the orthodontic treatment system can eliminate abnormal muscle function, allowing for the promotion of neuromuscular balance establishment and stabilization during the treatment of malocclusion deformity, activating the neuromuscular system, preventing joint discomfort, and achieving better treatment results. The appliances of the orthodontic treatment system are also provided with torque ridges, which enhance the control of the torque on the anterior teeth during treatment, thereby rendering the sagittal movement of the teeth more stable.

The orthodontic treatment system in the present disclosure includes occlusal pads arranged in the posterior regions of the appliances. The occlusal pads are configured to adjust the occlusal relationship between the upper and lower jaws and are detachably connected to the appliances, respectively. The occlusal pads can be arranged at different positions according to the type of malocclusion deformity or the requirements of various types of cases, offering high flexibility. Compared to existing appliances, the appliances according to the present disclosure have benefits of high treatment accuracy and cost savings.

### BRIEF DESCRIPTION OF THE DRAWINGS

One or more embodiments are illustrated with reference to the figures in the corresponding drawings. These illustrations are not intended to limit the embodiments. In the drawings the same reference numerals represent similar elements. The drawings are not intended to impose proportionate limitations, unless specifically stated otherwise.
FIG. 1 is a schematic diagram of structures of the first and second appliances in some embodiments of the present disclosure;
FIG. 2 is a schematic cross-sectional view, taken along a sagittal plane, of the first and second appliances in a wearing state in some embodiments of the present disclosure;
FIG. 3 is a simplified schematic cross-sectional view of some embodiments in FIG. 2;
FIG. 4 is a schematic diagram of a structure of the appliance of the orthodontic treatment system in some embodiments of the present disclosure;
FIG. 5 is a schematic cross-sectional view, taken along a sagittal plane, of the first and second appliances in a wearing state in some embodiments of the present disclosure;
FIG. 6 is a schematic cross-sectional view, taken along a sagittal plane, of the first and second appliances in a wearing state in some embodiments of the present disclosure;
FIG. 7 is a schematic diagram of a structure of the appliance of the orthodontic treatment system in some embodiments of the present disclosure;
FIG. 8 is a schematic diagram of a structure of the appliance of the orthodontic treatment system in some embodiments of the present disclosure;
FIG. 9 is a schematic diagram showing the wearing state of the first appliance in some embodiments of the present disclosure;
FIG. 10 is a schematic diagram of a structure of the first appliance in some embodiments of the present disclosure;
FIG. 11 is a schematic diagram showing the wearing state of the first appliance in some embodiments of the present disclosure;
FIG. 12 is a schematic diagram of a structure of the first appliance in some embodiments of the present disclosure;
FIG. 13 is a schematic diagram showing the state of teeth in the posterior region of a user;
FIG. 14 is a schematic diagram of a structure of the first support portion in some embodiments of the present disclosure;
FIG. 15 is a schematic diagram of a structure of the second support portion in some embodiments of the present disclosure;
FIG. 16 is a schematic diagram of a structure of the appliance of the orthodontic treatment system in some embodiments of the present disclosure;
FIG. 17 is a schematic diagram of a structure of the appliance of the orthodontic treatment system in some embodiments of the present disclosure;
FIG. 18 is a schematic diagram of a structure of the appliance of the orthodontic treatment system in some embodiments of the present disclosure;
FIG. 19 a schematic diagram of a structure of the appliance of the orthodontic treatment system in some embodiments of the present disclosure;
FIG. 20 a schematic diagram of a structure of the appliance of the orthodontic treatment system in some embodiments of the present disclosure;
FIG. 21 is a flowchart of a method for manufacturing the orthodontic treatment system in some embodiments of the present disclosure; and
FIG. 22 is a schematic diagram of a structure of a graphic processor provided in one embodiment of the present disclosure.

### DETAILED DESCRIPTION OF THE EMBODIMENTS

To make the objectives, technical solutions, and advantages of the embodiments in the present disclosure clearer, the following detailed description of the embodiments will be provided with reference to the accompanying drawings. However, it should be understood by those skilled in the art that while many technical details are included in these embodiments to aid the reader's understanding, the claimed technical solution can still be implemented without these details and the various changes and modifications of the embodiments. The division of the embodiments is for descriptive convenience and should not be construed as limiting the specific implementations of the present disclosure. The embodiments can be combined and referenced with each other as long as there is no contradiction.

In the embodiments of the present disclosure, the term "posterior region" is defined based on the classification of teeth in the 2nd edition, pages 36-38, of the INTRODUCTION TO ORAL MEDICINE published by Peking University Medical Press. The posterior region includes the premolars and molars, which are represented by teeth 4-8 in the FDI notation system. The teeth in "anterior region", represented by teeth 1-3 in the FDI notation system, include the central incisors, lateral incisors, and canines. Additionally, for teeth in the deciduous (milk tooth) stage, the "posterior region" is defined based on the classification of deciduous teeth in the 2nd edition, pages 40-41, of the INTRODUCTION TO ORAL MEDICINE published by Peking University Medical Press. The posterior region includes three categories: deciduous incisors, deciduous canines, and deciduous molars. The deciduous incisors include the deciduous central incisors and deciduous lateral incisors, and deciduous molars include the first deciduous molars and second deciduous molars.

Studies have shown that mandibular advancement promotes the growth rate and growth amount of condylar cartilage cells, enhances the functional activity of the lateral pterygoid muscle, and increases the mandibular length. Studies also have found that the stress value and displacement amount on the surface of the condylar cartilage are significantly related to the distance of mandibular advancement and mouth opening, showing a positive correlation. Therefore, it is suggested that the advancement distance of the mandible should not be too large, in order to prevent excessive stress distribution on the surface of the condyle that exceeds the body's adaptive capacity and leads to pathological damage. Existing silicone-based oral appliances have not taken this issue into consideration and all advance the mandible to the edge-to-edge position of the anterior teeth in one operation. The orthodontic treatment system in the present disclosure performs staged advancement for patients with severe sagittal discrepancy and deep overbite, and staged advancement is more beneficial for the remodeling of condylar tissues and easier for patients to adapt to.

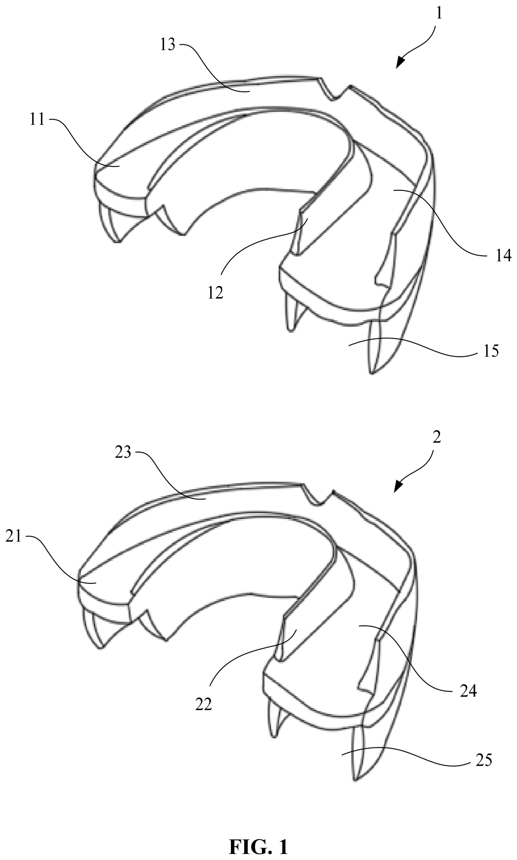

Therefore, in order to solve the existing problems that, during the treatment of early-stage malocclusion deformity cases using existing silicone appliances, the appliances apply excessive orthodontic force to the teeth, causing undesirable lingual tipping or labial tipping of teeth in the anterior region, or the clockwise or counterclockwise rotational displacement of the lower jaw, and in order to effectively remodel condylar tissues, the present disclosure proposes an orthodontic treatment system. With reference to FIG. 1, in some embodiments, an orthodontic treatment system is provided. The orthodontic treatment system includes a series of appliances. The series of appliances are designed to gradually achieve a treatment plan. The series of appliances includes at least a first appliance 1 and a second appliance 2. The first appliance 1 and the second appliance 2 may be made of a polymeric material, such as a siloxane polymer or a silane polymer. In some embodiments, the silicon-containing polymer is silicone rubber, for example, medical-grade silicone that has been recognized in the oral field in China. The silicone material is particularly soft and can comfortably abut on gums and other oral tissues of a user. The silicone material also has a certain ability to undergo elastic deformation.

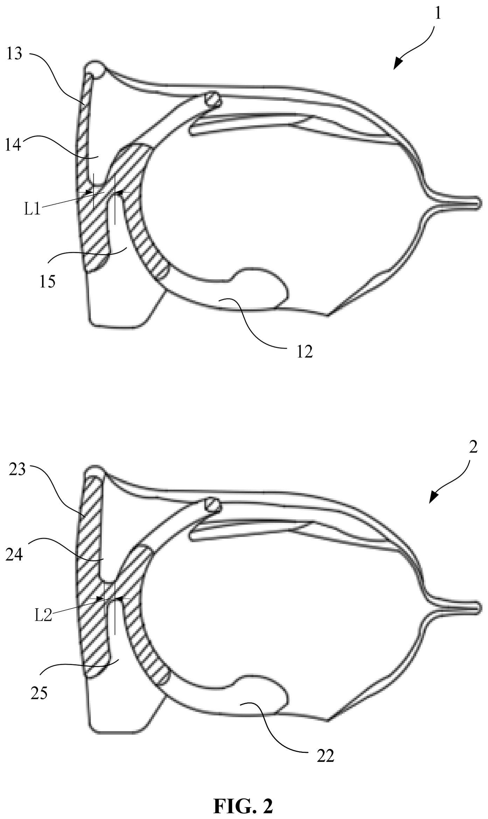

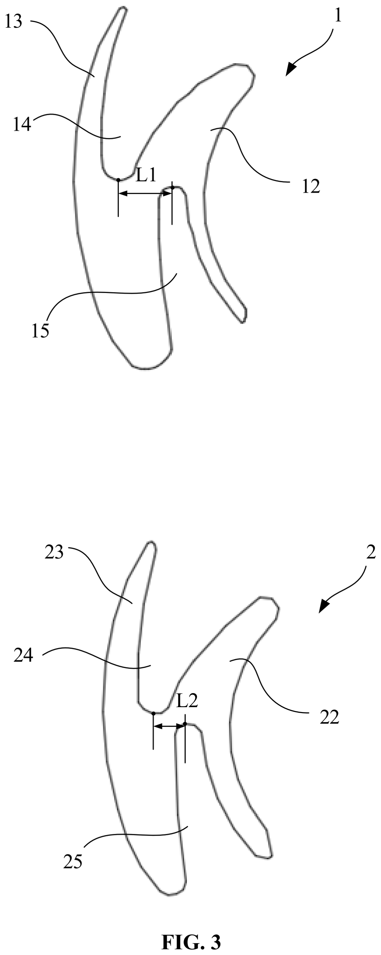

With reference to FIGS. 2 and 3, the first appliance 1 includes a first support portion 11 configured to be in contact with at least some of the teeth. The first support portion 11 is arranged parallel to the occlusal plane or a horizontal plane and is in contact with the occlusal surfaces of some teeth. A lingual side edge of the first support portion 11 extends toward the gums to form a first inner wall 12 to be arranged on the lingual side of the dental arch. In some embodiments, the first inner wall 12 may extend toward the maxillary and the mandibular by 1mm to 3mm, respectively, to cover the lingual side surfaces of the maxillary teeth and mandibular teeth and a portion of the gums. A buccal side edge of the first support portion 11 extends toward the gums to form a first outer wall 13. Similarly, the second outer wall 23 may extend toward the maxillary and mandibular by 1mm to 9mm, respectively, to cover the labial side surfaces of the maxillary teeth and mandibular teeth and a portion of the gums. The first outer wall 13 can block contact between the labial and buccal muscles and the dental arch, thereby eliminating the adverse effect on orthodontic treatment from the muscles during the treatment. The first outer wall 13, the first support portion 11, and the first inner wall 12 together define a first upper groove 14 configured to limit the upper dental arch and a first lower groove 15 configured to limit the lower dental arch. In a sagittal direction, the anterior region of the first upper groove 14 spaces apart from the anterior region of the first lower groove 15 by a first distance L1 configured for a first stage of the treatment plan.

The second appliance 2 of the orthodontic treatment system has a shape similar to that of the first appliance 1. In some embodiments, the second appliance 2 includes a second support portion 21 configured to be in contact with at least some of the teeth. The second support portion 21 is arranged parallel to the occlusal plane or a horizontal plane and is in contact with the occlusal surfaces of some teeth. A lingual side edge of the second support portion 21 extends toward the gums to form a second inner wall 22 to be arranged on the lingual side of the dental arch. In some embodiments, the second inner wall 22 may extend toward the maxillary and the mandibular by 1mm to 3mm, respectively, to cover the lingual side surfaces of the maxillary teeth and mandibular teeth and a portion of the gums. A buccal side edge of the second support portion 21 extends toward the gums to form a second outer wall 23. Similarly, the second outer wall 23 may extend toward the maxillary and mandibular by 1mm to 9mm, respectively, to cover the labial side surfaces of the maxillary teeth and mandibular teeth and a portion of the gums. The second outer wall 23 can block contact between the labial and buccal muscles and the dental arch, thereby eliminating the adverse effect on orthodontic treatment from the muscles during the treatment. The second outer wall 23, the second support portion 21, and the second inner wall 22 together define a second upper groove 24 configured to limit the upper dental arch and a second lower groove 25 configured to limit the lower dental arch. In a sagittal direction, the anterior region of the second upper groove 24 spaces apart from the anterior region of the second lower groove 25 by a second distance L2 configured for a second stage of the treatment plan. The first distance L1 is different from the second distance L2.

In the book "ORTHODONTIC CLINICAL TREATMENT BASED ON RESPIRATORY AND PERIORAL MUSCLE FUNCTION," translated by Bai Yuxing, Yang Li, and Zhao Hong, and authored by Etsuko Kondo, it is stated that "Any orthodontic appliance, no matter how effectively it aligns the teeth, the stability of the final tooth position ultimately depends on the mechanical balance between various functions, including the stomatognathic system and the respiratory system." Therefore, in the orthodontic treatment system according to the present disclosure, when treating dental arches or malocclusion deformities using the appliances, the condition of the perioral muscles is also considered as one of the reference factors. The outer walls of the appliances are designed to block contact between the labial and buccal muscles and the dental arch, thereby eliminating the adverse effect on orthodontic treatment from the perioral muscles, making the orthodontic treatment more precise and reliable.

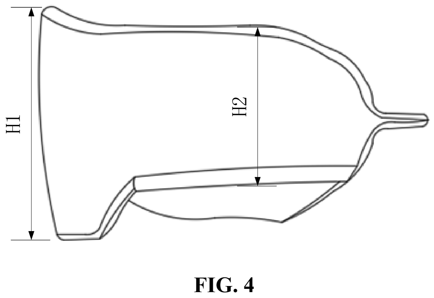

In some embodiments, as illustrated in FIG. 4, in the vertical direction, the height H1 of the anterior region of the first outer wall 13 or second outer wall 23 is in a range of 19 mm to 26 mm, and the height H2 of the posterior region of the first outer wall 13 or second outer wall 23 is in a range of 8 mm to 13 mm, in order to ensure the adaptability of the appliance within the patient's mouth during wearing, for example, to accommodate various dimensions of dental arches. Furthermore, for appliances used at different stages, the dimensions may vary according to the treatment needs, thereby improving treatment precision.

In some embodiments, the treatment plan may be divided into a plurality of treatment stages, during which the sagittal relationship between the upper and lower jaws are gradually adjusted. For example, when the second stage corresponding to the second appliance 2 follows the first stage corresponding to the first appliance 1, the second distance L2 is smaller than the first distance L1, with the second distance L2 being closer to the treatment goal than the first distance L1.

In some embodiments, with reference to FIG. 3, the first distance L1 is in a range of 3 mm to 5 mm, and the second distance L2 is in a range of 1 mm to 3 mm. For example, an orthodontic treatment system includes three appliances, and in the sagittal direction, the distances between the anterior regions of the upper grooves and the anterior regions of the lower grooves of the three appliances are 1 mm, 3 mm, and 5 mm, respectively. The first appliance 1 and the second appliance 2 are two of the three appliances.

In some other embodiments, when the first stage and the second stage are adjacent stages of the treatment plan, the difference between the first distance and the second distance is in a range of 1 mm to 5 mm. In some embodiments, the difference between the first distance and the second distance is 2 mm or 3 mm. Additionally, the transition from the first stage to the second stage may be understood as either the individual movement of the dental arch at upper jaw or of the dental arch at lower jaw, or the movement of both the dental arch at upper jaw and the dental arch at lower jaw.

In some embodiments, the orthodontic treatment system may be used to treat deep bite or underbite cases. When the orthodontic treatment system is used to treat deep bite cases, with reference to FIG. 2, in the sagittal direction, a relative arrangement relationship between the first upper groove 14 and the first lower groove 15 is consistent with a relative positional relationship between the second upper groove 24 and the second lower groove 25. Specifically, the anterior region of the first upper groove 14 is positioned more labially than the anterior region of the first lower groove 15, and the anterior region of the second upper groove 24 is positioned more labially than the anterior region of the second lower groove 25. In other words, the anterior region of the first lower groove 15 is positioned more lingually than the anterior region of the first upper groove 14, and the anterior region of the second lower groove 25 is positioned more lingually than the anterior region of the second upper groove 24. With the first appliance 1 and the second appliance 2 of the orthodontic treatment system, overbite of the patient can be gradually reduced to achieve a correct occlusal relationship.

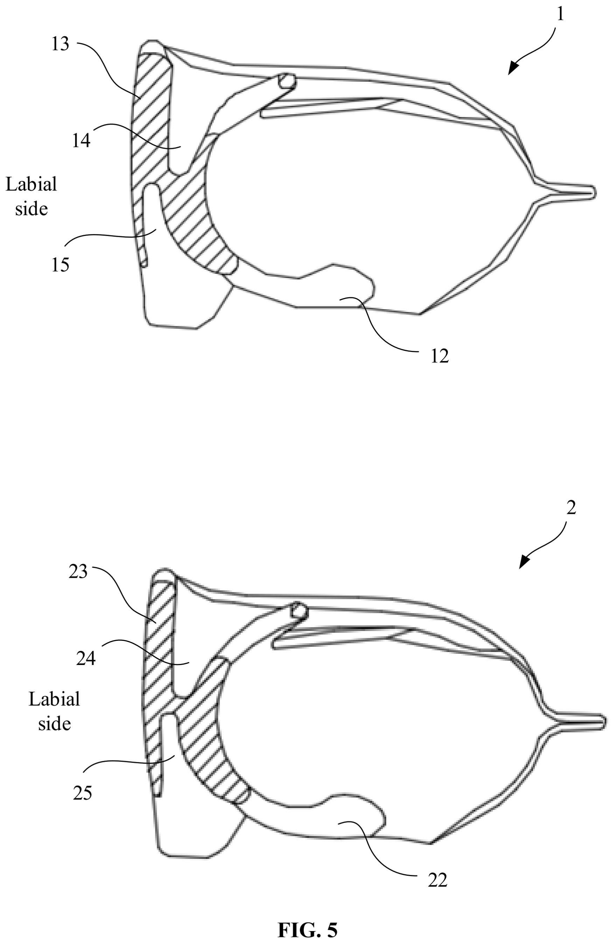

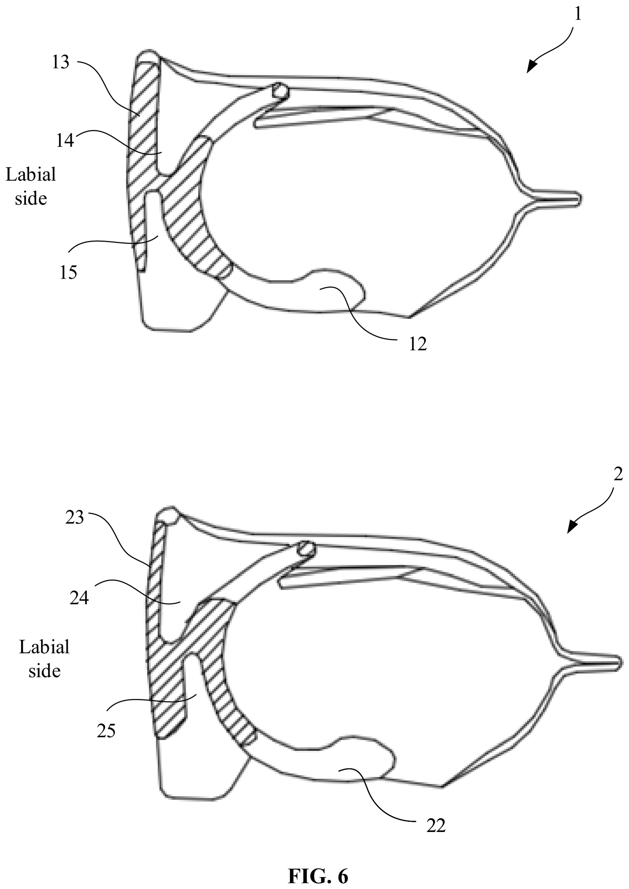

When the orthodontic treatment system is used to treat underbite cases, with reference to FIG. 5, in the sagittal direction, a relative arrangement relationship between the first upper groove 14 and the first lower groove 15 is consistent with a relative positional relationship between the second upper groove 24 and the second lower groove 25. For example, the anterior region of the first lower groove 15 is positioned more labially than the anterior region of the first upper groove 14, and the anterior region of the second lower groove 25 is positioned more labially than the anterior region of the second upper groove 24. In other words, the anterior region of the first upper groove 14 is positioned more lingually than the anterior region of the first lower groove 15, and the anterior region of the second upper groove 24 is positioned more lingually than the anterior region of the second lower groove 25. Alternatively, with reference to FIG. 6, in the sagittal direction, a relative arrangement relationship between the first upper groove 14 and the first lower groove 15 is inconsistent with a relative positional relationship between the second upper groove 24 and the second lower groove 25. The first appliance 1 and the second appliance 2 can contribute to the correct occlusal relationship. For example, the anterior region of the first lower groove 15 is positioned more labially than the anterior region of the first upper groove 14, indicating that the first lower groove 15 is positioned in front of the first upper groove 14. Similarly, the anterior region of the second upper groove 24 is positioned more labially than the anterior region of the second lower groove 25, indicating that the second upper groove 24 is positioned in front of the second lower groove 25. In the case of treating underbite cases, the second appliance 2 may be the final appliance of the orthodontic treatment system, and the target position for the second stage is also the final target position for the treatment. The second appliance 2 contributes to the correct occlusal relationship.

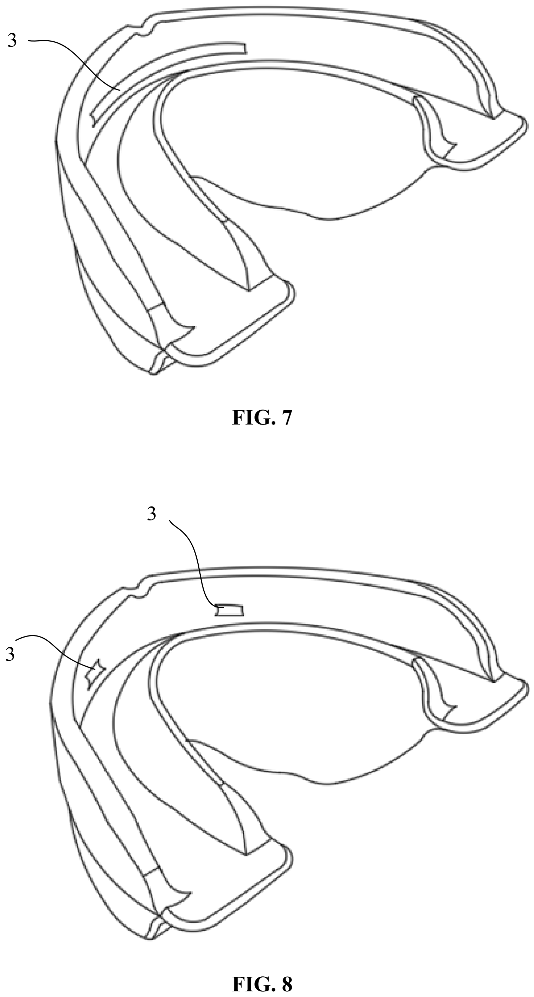

In some embodiments, with reference to FIGS. 7 and 8, the first appliance 1 or the second appliance 2 further includes a torque ridge 3 configured to prevent the labiolingual tipping of some teeth in the anterior region. For example, the inner surface of the first inner wall 12 and/or the inner surface of the first outer wall 13 is provided with the torque ridge 3. Similarly, the inner surface of the second inner wall 22 and/or the inner surface of the second outer wall 23 is provided with the torque ridge 3. The torque ridge 3 is formed to protrude from the inner surface towards the teeth, and the torque ridge 3 has a vertical protrusion height less than or equal to 0.5 mm.

In some embodiments, with reference to FIGS. 7 and 8, the torque ridge 3 is positioned near the incisal edges of the anterior teeth. When a surface of the groove drives the teeth to move along the sagittal direction on one side, a surface of the groove on the opposing side protrudes at a portion near the incisal edges of the teeth and towards the teeth to form the torque ridge 3, in order to prevent undesirable labiolingual tipping of the teeth during the movement.

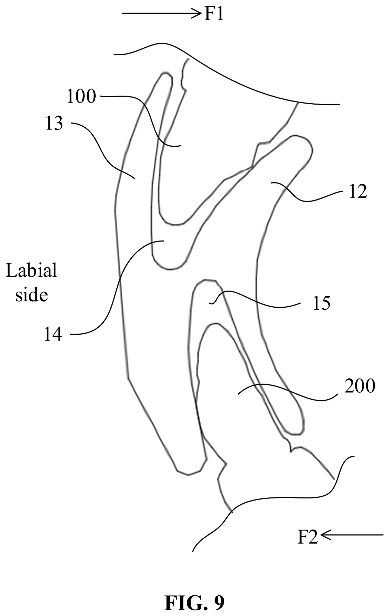

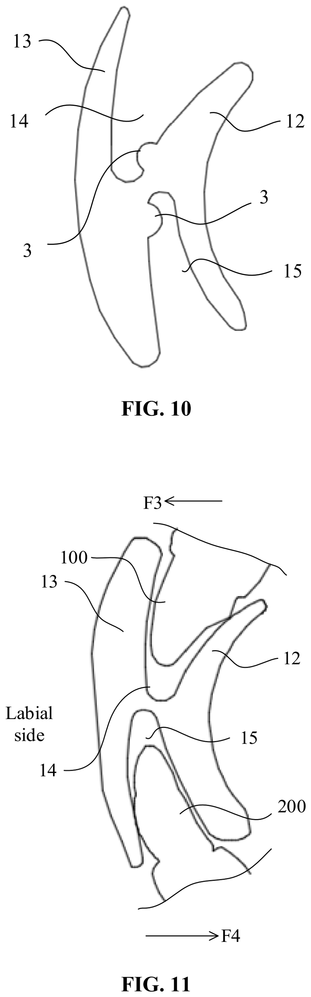

For example, when the first appliance 1 is used to treat deep bite, with reference to FIGS. 9 and 10, the anterior region of the first lower groove 15 of the first appliance 1 is positioned more lingually than the anterior region of the first upper groove 14. The inner surface of the first outer wall 13 of the first upper groove 14 applies a lingual force F1 to the teeth 100 in the anterior region at upper jaw, making it easier to occur lingual tipping of the teeth at the incisal edges. Therefore, a torque ridge 3 is provided on the inner surface of the first inner wall 12 located in the first upper groove 14. Similarly, the inner surface of the first inner wall 12 of the first lower groove 15 applies a labial force F2 to the teeth 200 in the anterior region at lower jaw, making it easier to occur labial tipping of the teeth at the incisal edges. Therefore, a torque ridge 3 is provided on the inner surface of the first outer wall 13 located in the first lower groove 15.

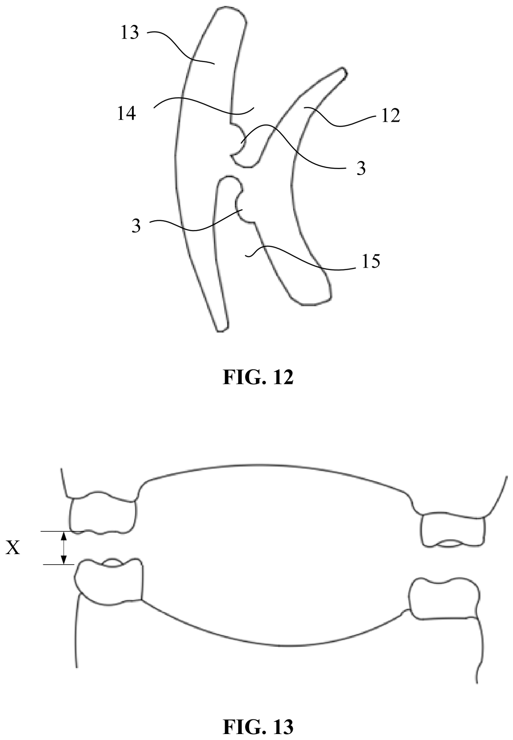

For example, when the first appliance 1 is used to treat underbite, where the anterior teeth at lower jaw are positioned in front of the anterior teeth at upper jaw (commonly known as CL III malocclusion), there is a need to retract the anterior teeth at lower jaw and/or draw the anterior teeth at upper jaw. In this situation, with reference to FIGS. 11 and 12, the anterior region of the first upper groove 14 of the first appliance 1 is positioned more lingually than the anterior region of the first lower groove 15. The inner surface of the first inner wall 12 of the first upper groove 14 applies a labial force F3 to the teeth 100 in the anterior region of upper jaw, making it easier to occur labial tipping of the teeth at the incisal edges. Therefore, a torque ridge 3 is provided on the inner surface of the first outer wall 13 located in the first upper groove 14. Similarly, the inner surface of the first outer wall 13 of the first lower groove 15 applies a lingual force F4 to the teeth 200 in the anterior region of lower jaw, making it easier to occur lingual tipping of the teeth at the incisal edges. Thus, a torque ridge 3 is provided on the inner surface of the first inner wall 12 located in the first lower groove 15.

In some embodiments, with reference to FIGS. 7 and 8, the torque ridge 3 may be arranged consecutively or inconsecutively in the anterior region. When the torque ridge 3 is consecutively arranged in the anterior region, it covers at least four consecutive teeth along the curve of the dental arch. Alternatively, the torque ridge 3 may cover up to three teeth that are spaced, with a minimum of two teeth covered. Alternatively, for teeth prone to labiolingual tipping, the torque ridge 3 is arranged along the mesiodistal direction of those teeth.

In some embodiments, a vertical height of the anterior region of the first support portion 11 is equal to a vertical height of the anterior region of the second support portion 21. The vertical heights of the anterior regions of the first and second support portions 11 and 21 corresponds to the target occlusal relationship in the treatment plan. The vertical heights of the anterior regions of the support portions of each appliance of the orthodontic treatment system are designed to be equal to one another, allowing the teeth in anterior region at upper jaw and/or lower jaw to be gradually retracted, and thereby achieving the target occlusal relationship.

In some embodiments, with reference to FIG. 13, for the arrangement of teeth in the current treatment stage, a height of the posterior region of the support portion of the appliance compensates for a gap X between a surface of the posterior region of the support portion and the teeth located at the positions corresponding to the posterior region of the support portion. As the treatment progresses, the vertical height of the posterior region of the support portion of the appliance gradually decreases, gradually flattening the Spee curve. In this way, jaw opening at the posterior teeth due to premature contact of the anterior teeth can be prevented, and it can be ensured that the lower anterior teeth will not prematurely contact with the upper anterior teeth during retraction of the anterior teeth in the process of treatment, allowing for the gradual adjustment of the occlusion relationship during the treatment.

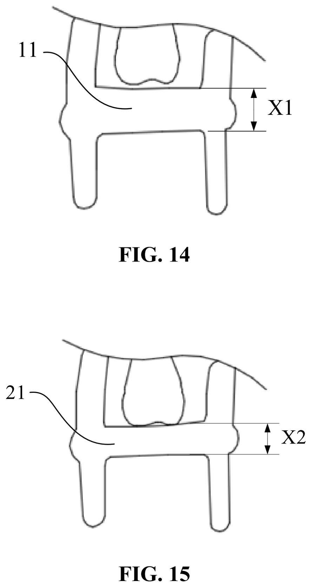

For example, with reference to FIGS. 14 and 15, in the first stage of the treatment plan, the vertical height of the posterior region of the first support portion 11 compensates for the gap X between the surface of the posterior region of the first support portion 11 and teeth located at positions corresponding to the posterior region of the first support portion. In the second stage of the treatment plan, the vertical height of the posterior region of the second support portion 21 compensates for the gap X between the surface of the posterior region of the second support portion 21 and teeth located at positions corresponding to the posterior region of the second support portion. The height X1 of the posterior region of the first support portion 11 is greater than the height X2 of the posterior region of the second support portion 21. The height X1 of the posterior region of the first support portion 11 is in a range of 15mm to 2mm, and the height X2 of the posterior region of the second support portion 21 is in a range of 6mm to 2mm.

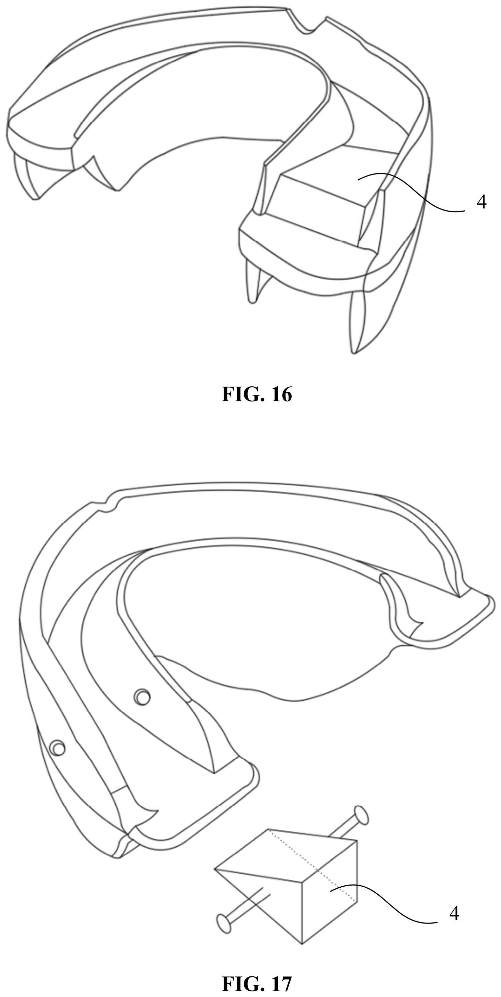

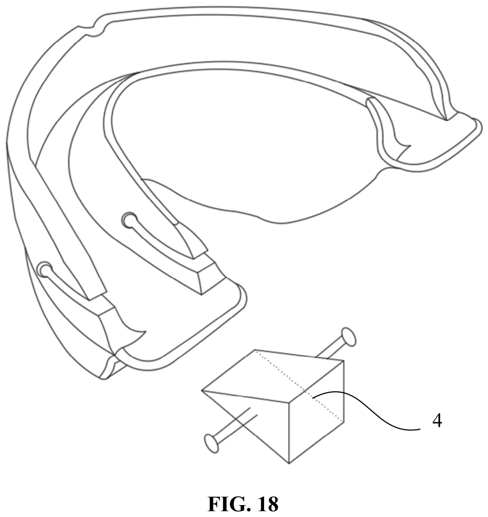

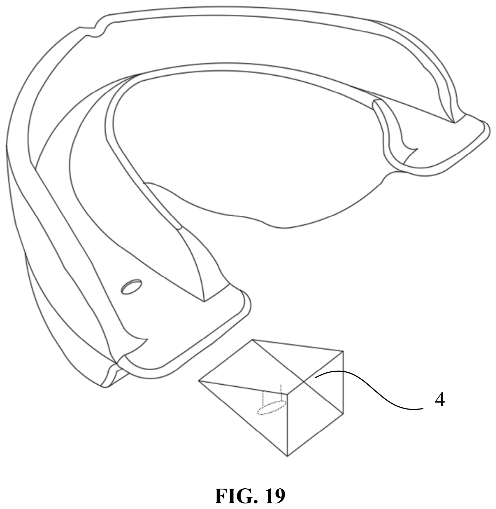

In some embodiments, with reference to FIGS. 16 to 19, an occlusal pad 4 configured to adjust the vertical occlusion relationship between the upper and lower jaws is provided on a surface of the support portion of the appliance. The occlusal pad 4 is detachably connected to the support portion by an engagement that at least restricts two degrees of freedom, which can ensure that the occlusal pad 4 is stably fixed to the support portion and will not move or fall off during usage.

In addition, the height of the occlusal pad 4 compensates for the gap between the surface of the posterior region of the support portion and the teeth located at positions corresponding to the posterior region of the support portion. The occlusal pad 4 is arranged along the dental arch on the support portion and can cover one or more teeth in the posterior region. The height of the occlusal pad 4 compensating for the gap between the surface of the posterior region of the support portion and the teeth located at positions corresponding to the posterior region of the support portion mainly includes: Situation One: the occlusal pad 4 only contacts with the occlusal surfaces of corresponding teeth without applying clinical orthodontic force, in this situation, the height of the occlusal pad 4 at this position is equal to the gap formed by the current tooth arrangement in the posterior region; and Situation Two: the occlusal pad 4 applies clinical orthodontic force/vertical force on the corresponding teeth, for example, the height of the occlusal pad 4 at this position is greater than the gap formed by the current tooth arrangement in the posterior region, so that the occlusal pad 4 can apply an orthodontic force on the teeth in a direction directing from teeth to the gums by contacting with the teeth.

In some embodiments, the occlusal pads 4 are consecutively arranged along the dental arch. The benefit of consecutively arranging the occlusal pads 4 is that the Spee curve can be gradually leveled by adjusting the heights of the occlusal pads 4 at various treatment stages.

In some embodiments, when the occlusal pads 4 are consecutively arranged along the dental arch in the posterior region, the heights of the occlusal pads 4 may gradually decrease from one end near the anterior region to the other end away from the anterior region. Alternatively, the heights of the occlusal pads 4 may gradually increase from one end near the anterior region to the other end away from the anterior region. The heights of the occlusal pads 4 refer to the vertical heights of the occlusal pads 4 and may be in a range of 0 to 15mm.

In some other embodiments, occlusal pads 4 are arranged at intervals along the dental arch. The advantage of arranging the occlusal pads 4 at intervals is that when individual teeth require to be pressed, the occlusal pads 4 can be provided on the support portion at the positions corresponding to the teeth. Alternatively, when individual teeth need to be elongated, the occlusal pads 4 can be provided on the support portion at the positions corresponding to teeth adjacent to the individual teeth, thereby providing space for elongating the teeth. By arranging the occlusal pads 4 at intervals, individual teeth can be orthodontically treated precisely, and the required heights of the occlusal pads 4 can be flexibly selected for different stages of treatment.

In some embodiments, occlusal pads are provided on the surfaces of both the first support portion 11 of the first appliance 1 and the second support portion 21 of the second appliance 2. A first occlusal pad for adjusting the vertical occlusal relationship between the upper and lower jaws is provided on the surface of the first support portion 11 facing to the occlusal surfaces of the teeth. A second occlusal pad for adjusting the vertical occlusal relationship between the upper and lower jaws is provided on the surface of the second support portion 21 facing to the occlusal surfaces of the teeth.

In some embodiments, the height of the first occlusal pad is greater than the height of the second occlusal pad.

In some embodiments, the first occlusal pad is detachably connected to the first support portion, and the second occlusal pad is detachably connected to the second support portion.

In some embodiments, the first occlusal pads and/or the second occlusal pads are consecutively arranged along the dental arch.

In some embodiments, first occlusal pads and/or second occlusal pads are arranged at intervals along the dental arch.

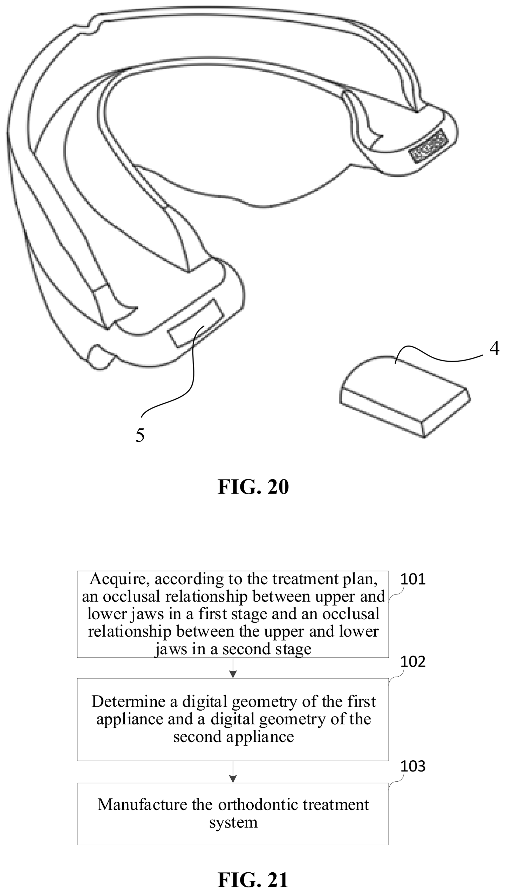

In some other embodiments, with reference to FIG. 20, accommodating grooves 5 are defined at posterior regions of the support portions of the appliances, and the occlusal pads 4 are respectively arranged in the accommodating grooves 5. The occlusal pads 4 are detachably connected to the accommodating grooves 5, respectively, and the occlusal pads 4 fit to the accommodating grooves 5 in shape. The thickness of an occlusal pad may be 1 mm, 2 mm, 3 mm, or 5 mm to adjust the vertical heights of the posterior regions of the support portions.

The present disclosure further provides a method for manufacturing the orthodontic treatment system, as shown in FIG. 21.

At operation 101, the occlusal relationship between the upper and lower jaws in the first stage and the occlusal relationship between the upper and lower jaws in the second stage are acquired according to the treatment plan. The occlusal relationship in the first stage refers to a first distance between the anterior teeth at the upper jaw and anterior teeth at the lower jaw in the sagittal direction. The occlusal relationship in the second stage refers to a second distance between the anterior teeth at the upper jaw and anterior teeth at the lower jaw in the sagittal direction.

At operation 102, the digital geometries of the first appliance and the second appliance are determined. The digital geometry of the first appliance at least includes a first upper groove configured to accommodate the upper dental arch and a first lower groove configured to accommodate the lower dental arch. The distance between the first upper groove and the first lower groove in the sagittal direction is equal to the first distance. The digital geometry of the second appliance at least includes a second upper groove configured to accommodate the upper dental arch and a second lower groove configured to accommodate the lower dental arch. The distance between the second upper groove and the second lower groove in the sagittal direction is equal to the second distance. The first distance is different from the second distance. The system may include standardized models of appliances, and appliance models corresponding to different treatment stages may be generated based on the acquired occlusal relationships at those treatment stages. Alternatively, the digital models of appliances at various treatment stages may be generated directly according to the dentition at each stage. In other words, the methods or approaches for acquiring the digital geometry of the first appliance and/or the second appliance are not limited to some certain methods or approaches.

At operation 103, the orthodontic treatment system is manufactured. The first appliance and the second appliance may be directly manufactured using additive manufacturing based on the digital geometries of the first appliance and the second appliance. The additive manufacturing, also known as 3D printing, integrates computer-aided design and technologies of material processing and forming. The additive manufacturing is on the basis of digital model files, adopts processes such as extrusion, sintering, melting, photopolymerization, and jetting, and uses software and numerical control systems to gradually stack specialized metal materials, non-metal materials, and medical bio-materials layer by layer, in order to create the physical objects.

At operation 103, the orthodontic treatment system may also be manufactured using injection molding. For example, molds are made based on the digital geometries of the first appliance and the second appliance. Then, flowability of a material with thermoplastic properties is maintained at high temperatures. In some embodiments, flowing silicone rubber material at 160°C is injected into the molds to form the first appliance and the second appliance.

It is noted that in these embodiments, all the modules involved are logical modules. In practical applications, a logical unit may be a physical unit, a part of a physical unit, or a combination of multiple physical units. Furthermore, to highlight the innovative aspects of the present disclosure, these embodiments do not introduce units that are less closely related to solving the technical problems proposed by the invention, which, however, does not indicate that other units are not involved in these embodiments.

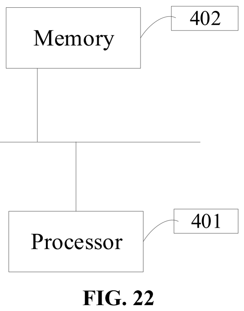

Some embodiments of the present disclosure provide an electronic device, as shown in FIG. 22, including at least one processor 401 and a memory 402 communicatively connected to the at least one processor 401. The memory 402 stores instructions that are executable by the at least one processor 401, so that the at least one processor 401 can perform operations of the method for manufacturing an orthodontic treatment system.

The memory may be connected to the processor through a bus. The bus may include any number of interconnected buses and bridges, which connect various circuits of one or more processors to the memory. The bus may also connect various other circuits, such as peripheral devices, voltage regulators, and power management circuits together, all of which are well known in the art. Therefore, they are not described in further detail herein. The bus interface provides an interface between the bus and the transceiver. The transceiver may be a single component or multiple components, such as multiple receivers and transmitters, providing a unit for communication with various other devices over a transmission medium. The data processed by the processor is transmitted over the wireless medium using an antenna, and further, the antenna also receives data and transmits it to the processor.

The processor is responsible for managing the bus and performing typical processing tasks. The processor can also provide various functions, including timing, peripheral interfaces, voltage regulation, power management, and other control functions. The memory may store the data that the processor uses during operation.

Some embodiments of the present disclosure provide a non-transitory computer-readable storage medium that stores a computer program, which, when executed by a processor, causes the processor to perform operations of the method described in the above embodiments.

That is, those skilled in the art shall understand that all or part of the operations of the method in the above embodiments may be completed by instructing relevant hardware using a program. The program is stored in a storage medium and includes several instructions to cause a device (such as a microcontroller, chip, etc.) or a processor to execute all or part of the operations of the method described in various embodiments of the present disclosure. The aforementioned storage medium includes various media capable of storing program code, such as USB drives, external hard drives, read-only memory (ROM), random access memory (RAM), magnetic disks, optical discs.

It is noted that the above embodiments may be freely combined to form different new embodiments as needed, without causing any contradictions. Such combinations fall within the scope of protection of the present disclosure. These combinations will not be further elaborated herein for conciseness.

Only preferred embodiments of the present disclosure are described above. It is noted that modifications and refinements may be made by those skilled in the art without departing from the principles of the present disclosure. These modifications and refinements should also be considered within the scope of protection of the present disclosure.

Similarly, the above-described embodiments are merely specific implementations of the present disclosure. However, the scope of protection of the present disclosure is not limited to these embodiments. Any changes or substitutions that is easily conceivable to a person skilled in the art within the technical scope disclosed by the present disclosure should be included within the scope of protection of the present disclosure. Therefore, the scope of protection of the present disclosure shall be defined by the scope of the claims.

## Claims

1. An orthodontic treatment system, comprising a series of appliances designed to progressively implement a treatment plan, the series of appliances comprising at least a first appliance and a second appliance, wherein:
the first appliance includes a first support portion configured to be in contact with at least some of teeth, the first support portion has a lingual side edge extending toward gums to form a first inner wall to be arranged on a lingual side of a dental arch, and the first support portion has a buccal side edge extending toward the gums to form a first outer wall configured to be in contact with labial and buccal muscles, the first outer wall, the first support portion, and the first inner wall together define a first upper groove configured to limit an upper dental arch and a first lower groove configured to limit a lower dental arch, and in a sagittal direction, an anterior region of the first upper groove spaces apart from an anterior region of the first lower groove by a first distance configured for a first stage of the treatment plan; and
the second appliance includes a second support portion configured to be in contact with at least some of the teeth, the second support portion has a lingual side edge extending toward gums to form a second inner wall to be arranged on a lingual side of a dental arch, and the second support portion has a buccal side edge extending toward the gums to form a second outer wall configured to be in contact with the labial and buccal muscles, the second outer wall, the second support portion, and the second inner wall together define a second upper groove configured to limit the upper dental arch and a second lower groove configured to limit the lower dental arch, and in the sagittal direction, an anterior region of the second upper groove spaces apart from an anterior region of the second lower groove by a second distance configured for a second stage of the treatment plan;
wherein the first distance differs from the second distance.

2. The orthodontic treatment system according to claim 1, wherein the second stage is subsequent to the first stage.

3. The orthodontic treatment system according to claim 2, wherein the second distance is less than the first distance.

4. The orthodontic treatment system according to claim 3, wherein a difference between the first distance and the second distance is in a range of 1 mm to 5 mm in response to the first stage and the second stage being adjacent stages of the treatment plan.

5. The orthodontic treatment system according to claim 3, wherein the first distance is in a range of 3 mm to 5 mm; and the second distance is in a range of 1 mm to 3 mm.

6. The orthodontic treatment system according to claim 2, wherein in the sagittal direction, a relative arrangement relationship between the first upper groove and the first lower groove is consistent with a relative positional relationship between the second upper groove and the second lower groove.

7. The orthodontic treatment system according to claim 1, wherein a torque ridge configured to prevent labiolingual tipping of one or more teeth in an anterior region is provided on an inner surface of at least one of the first inner wall or the first outer wall.

8. The orthodontic treatment system according to claim 1, wherein a torque ridge configured to prevent labiolingual tipping of one or more teeth in an anterior region is provided on an inner surface of at least one of the second inner wall or the second outer wall.

9. The orthodontic treatment system according to claim 7 or 8, wherein the torque ridge protrudes from the inner surface toward the teeth.

10. The orthodontic treatment system according to claim 9, wherein the torque ridge has a vertical protrusion height less than or equal to 0.5 mm.

11. The orthodontic treatment system according to claim 9, wherein in the sagittal direction, the anterior region of the first upper groove is configured to be closer to a tongue than the anterior region of the first lower groove.

12. The orthodontic treatment system according to claim 11, wherein a torque ridge is provided on a lingual side surface of the first lower groove and adjacent to an incisal edge of the teeth.

13. The orthodontic treatment system according to claim 12, wherein a torque ridge is provided on a labial side surface of the first upper groove and adjacent to the incisal edge of the teeth.

14. The orthodontic treatment system according to claim 9, wherein in the sagittal direction, the anterior region of the first lower groove is configured to be closer to a tongue than the anterior region of the first upper groove.

15. The orthodontic treatment system according to claim 14, wherein a torque ridge is provided on a labial side surface of the first lower groove and adjacent to an incisal edge of the teeth.

16. The orthodontic treatment system according to claim 15, wherein a torque ridge is provided on a lingual side surface of the first upper groove and adjacent to the incisal edge of the teeth.

17. The orthodontic treatment system according to claim 9, wherein the torque ridge is configured to cover at least four teeth consecutively.

18. The orthodontic treatment system according to claim 9, wherein the torque ridge is configured to cover up to three teeth that are spaced.

19. The orthodontic treatment system according to claim 2, wherein a vertical height of an anterior region of the first support portion is equal to a vertical height of an anterior region of the second support portion.

20. The orthodontic treatment system according to claim 1, wherein in the first stage of the treatment plan, a posterior region of the first support portion has a vertical height configured to compensate for a gap between a surface of the posterior region of the first support portion and teeth located at positions corresponding to the posterior region of the first support portion.

21. The orthodontic treatment system according to claim 20, wherein in the second stage of the treatment plan, a posterior region of the second support portion has a vertical height configured to compensate for a gap between a surface of the posterior region of the second support portion and teeth located at positions corresponding to the posterior region of the second support portion.

22. The orthodontic treatment system according to claim 2 or 21, wherein a height of the posterior region of the first support portion is different from a height of the posterior region of the second support portion.

23. The orthodontic treatment system according to claim 22, wherein the height of the posterior region of the first support portion is greater than the height of the posterior region of the second support portion.

24. The orthodontic treatment system according to claim 20, wherein a height of the posterior region of the first support portion is in a range of 15 mm to 2 mm, and a height of the posterior region of the second support portion is in a range of 6 mm to 2 mm.

25. The orthodontic treatment system according to claim 1, wherein in response to the orthodontic treatment system including at least the first appliance, the second appliance, and one or more additional appliances, vertical heights of posterior regions of the first support portion, the second support portion, and one or more support portions of the one or more additional appliances progressively decrease as treatment progresses.

26. The orthodontic treatment system according to claim 2, wherein a first occlusal pad configured to adjust a vertical occlusal relationship between upper and lower jaws is provided on a surface of the first support portion facing to occlusal surfaces of the teeth, and a second occlusal pad configured to adjust the vertical occlusal relationship between the upper and lower jaws is provided on a surface of the second support portion facing to the occlusal surfaces of the teeth.

27. The orthodontic treatment system according to claim 26, wherein a height of the first occlusal pad is greater than a height of the second occlusal pad.

28. The orthodontic treatment system according to claim 26, wherein the first occlusal pad is detachably connected to the first support portion, and the second occlusal pad is detachably connected to the second support portion.

29. The orthodontic treatment system according to claim 28, wherein detachably connecting is implemented by an engagement that restricts at least two degrees of freedom.

30. The orthodontic treatment system according to claim 26, including first occlusal pads and/or second occlusal pads consecutively arranged along the dental arch.

31. The orthodontic treatment system according to claim 26, including first occlusal pads and/or second occlusal pads arranged at intervals along the dental arch.

32. The orthodontic treatment system according to claim 1, including occlusal pads, wherein accommodating grooves are defined at posterior regions of support portions of at least one appliance of the orthodontic treatment system, and the occlusal pads are respectively arranged in the accommodating grooves.

33. The orthodontic treatment system according to claim 32, wherein the occlusal pads are detachably connected to the accommodating groove, respectively, and the occlusal pads fit to the accommodating grooves in shape.

34. A method for manufacturing an orthodontic treatment system, the orthodontic treatment system comprising a series of appliances, and the series of appliances being designed to progressively implement a treatment plan and comprising at least a first appliance and a second appliance, wherein the method includes:
acquiring, according to the treatment plan, an occlusal relationship between upper and lower jaws in a first stage of the treatment plan and an occlusal relationship between the upper and lower jaws in a second stage of the treatment plan, wherein the occlusal relationship in the first stage refers to a first distance between anterior teeth at the upper jaw and anterior teeth at the lower jaw in a sagittal direction, and the occlusal relationship in the second stage refers to a second distance between the anterior teeth at the upper jaw and the anterior teeth at the lower jaw in the sagittal direction;
determining a digital geometry of the first appliance and a digital geometry of the second appliance, wherein the digital geometry of the first appliance includes at least a first upper groove configured to accommodate an upper dental arch and a first lower groove configured to accommodate a lower dental arch, and a distance between the first upper groove and the first lower groove in the sagittal direction is equal to the first distance, and wherein the digital geometry of the second appliance includes at least a second upper groove configured to accommodate the upper dental arch and a second lower groove configured to accommodate the lower dental arch, a distance between the second upper groove and the second lower groove in the sagittal direction is equal to the second distance, and the first distance is different from the second distance; and
manufacturing the orthodontic treatment system, including manufacturing the first appliance according to the digital geometry of the first appliance and manufacturing the second appliance according to the digital geometry of the second appliance.

35. The method according to claim 34, wherein manufacturing the orthodontic treatment system, includes: manufacturing the orthodontic treatment system using additive manufacturing or injection molding.

36. The method according to claim 35, wherein the orthodontic treatment system is manufactured from silicone rubber.

37. An electronic device, including:
at least one processor; and
a memory communicatively connected to the at least one processor, wherein the memory stores instructions executable by the at least one processor, and the instructions, when executed by the at least one processor, cause the at least one processor to perform operations of the method according to any one of claims 34 to 36.

38. A computer-readable storage medium, configured to store a computer program, wherein the computer program, when executed by a processor, causes the processor to perform operations of the method according to any one of claims 34 to 36.
